## Europäisches Patentamt
## European Patent Office
### Office européen des brevets

(11) Veröffentlichungsnummer: **0 225 459**

**A2**

# (12) EUROPÄISCHE PATENTANMELDUNG

(21) Anmeldenummer: **86114782.5**

(22) Anmeldetag: **24.10.86**

(51) Int. Cl.4: **E05B 45/00 , B62H 5/00**

(30) Priorität: **26.10.85 DE 8530345 U**

(43) Veröffentlichungstag der Anmeldung:
**16.06.87 Patentblatt 87/25**

(84) Benannte Vertragsstaaten:
**AT BE CH DE FR GB IT LI NL SE**

(71) Anmelder: **Wulff, Karl-Heinz**
**Lützowstrasse 2**
**D-3300 Braunschweig(DE)**

(72) Erfinder: **Wulff, Karl-Heinz**
**Lützowstrasse 2**
**D-3300 Braunschweig(DE)**

(74) Vertreter: **Lins, Edgar, Dipl.-Phys. et al**
**Patentanwälte Gramm + Lins**
**Theodor-Heuss-Strasse 2**
**D-3300 Braunschweig(DE)**

(54) Schlossvorrichtung zum Sichern von Zweiradfahrzeugen.

(57) Mit einer Schloßvorrichtung zum Sichern von Zweiradfahrzeugen mit einem Gehäuse (1,1'), das beide Enden eines schlaufenförmigen Sicherungsteils (6) aufnimmt und in dem eine Rauchpatrone (13,13') und ein akustischer Signalgeber (12,12') angeordnet sind, die mittels eines das schlaufenförmige Sicherungsteil (6) durchlaufenden Auslösedrahts einschaltbar sind, läßt sich eine wirksame Alarm-und Abschreckfunktion gegen gewaltsame Manipulationen erreichen, wenn der Auslösedraht mit einer im Gehäuse (1,1') angebrachten elektrischen Schaltung verbunden ist, wenn Versorgungsbatterien (16) im Gehäuse(1') angeordnet sind und wenn die Rauchpatrone (13,13') und ein zusätzlicher optischer Signalgeber (17) durch die elektrische Schaltung auslösbar sind.

Fig. 1

## Schloßvorrichtung zum Sichern von Zweiradfahrzeugen

Die Erfindung betrifft eine Schloßvorrichtung zum Sichern von Zweiradfahrzeugen mit einem Gehäuse, das beide Enden eines - schlaufenförmigen Sicherungsteils aufnimmt und in dem eine Rauchpatrone und ein akustischer Signalgeber angeordnet sind, die mittels eines das - schlaufenförmige Sicherungsteil durchlaufenden Auslösedrahts einschaltbar sind.

Die bisherige Erfahrung mit Zweiraddiebstählen, insbesondere Fahrraddiebstählen, zeigt, daß die üblichen Sicherungssysteme keinen wirksamen Schutz gegen einen Diebstahl bilden. Diese Sicherungssysteme beruhen darauf, daß ein mechanisches Hindernis die Bewegung mindestens eines der Räder behindert. Es hat sich herausgestellt, daß die Beseitigung des mechanischen Hindernisses jeweils nur eine Frage der Zeit ist, so daß in vielen Fällen ein Schutz vor Diebstählen nicht erreicht wird.

Es ist daher der Gedanke entstanden, derartige Schloßsysteme nach Art einer Alarmanlage auszugestalten. So ist bei Drahtseilschlössern in dem Drahtseil ein Auslösedraht vorgesehen worden, der mit einer durch den Auslösedraht gespannten Feder verbunden ist. Wird das Drahtseil durch trennt, bewirkt die nunmehr entspannte Feder die Auslösung eines optischen und/oder akustischen Signalgebers, der bewirken soll, daß der Dieb bei der weiteren Manipulation bei dem Zweirad gehindert wird.

Der hiermit erzielbare Effekt ist im Verhältnis zum Aufwand relativ gering, weil das optische Signal durch Abdecken des Schlosses unterdrückbar ist und das akustische Signal, beispielsweise in Form einer Klingel, durch Dämpfungsmittel stark geschwächt werden kann, so daß die Alarmfunktion praktisch nicht mehr gegeben ist.

Der Erfindung liegt demgegenüber die Aufgabe zugrunde, ein Schloß der eingangs erwähnten Art zu erstellen, daß bei einer gewaltsamen Manipulation eine wirksame Alarm-und Abschreckungsfunktion aufweist.

Diese Aufgabe wird erfindungsgemäß dadurch gelöst, daß der Auslösedraht mit einer im Gehäuse angebrachten elektrischen Schaltung verbunden ist, daß Versorgungsbatterien im Gehäuse angeordnet sind und daß die Rauchpatrone und ein zusätzlicher optischer Signalgeber durch die elektrische Schaltung auslösbar sind.

Die erfindungsgemäße Schloßvorrichtung erkennt eine Unterbrechung des durch den Auslösedraht geschlossenen Stromkreises und löst neben einem akustischen Signalgeber das Abbrennen der Rauchpatrone aus. Das Pulver wird vorzugsweise elektrisch gezündet und brennt so ab, wie man es von Feuerwerkskörpern kennt. Dabei kann ein sehr helles, gleißendes Licht erzeugt werden, das einerseits ein Aufmerksamkeit erregendes, optisches Signal abgibt, andererseits den Dieb blendet und wegen der sprühenden Funken von einer weiteren Manipulation an dem Zweirad abhält. Ein hierfür geeignetes Pulver sind Magnesiumspäne, da sie sehr hell und nach dem Zünden selbsttätig brennen.

In einer bevorzugten Ausführungsform wird jedoch ein anderes Pulver für die Rauchpatrone verwendet, nämlich ein stark färbendes Pulver. Dieses erzeugt nicht nur ein optisches Signal, sondern bewirkt auch ein Einfärben des Fahrrades und des Diebes und verhindert auf diese Weise wirksam die weitere Ausführung des Diebstahls.

Da die Rauchpatrone nach einer gewissen Zeit, beispielsweise einer halben Minute, abgebrannt ist, ist bei der erfindungsgemäßen Schloßvorrichtung ein zusätzlicher optischer Signalgeber vorgesehen, der vorzugsweise durch ein Blitzlichtgerät gebildet sein kann. Dieses kann durch die im Gehäuse angeordneten Versorgungsbatterien über größenordnungsmäßig eine halbe Stunde betrieben werden.

Es ist möglich, als akustischen Signalgeber eine Gaspatrone in dem Gehäuse anzuordnen, auf der eine Pfeife montiert ist. Dadurch wird ein sehr lautes akustisches Signal erzeugt, das durch die Entleerung der unter Druck stehenden Gaspatrone über längere Zeit anhält. Die Gefahr, daß das akustische Signal durch äußere Maßnahmen gedämpft wird, besteht nicht, da das abbrennende Pulver den Dieb von einer Manipulation unmittelbar an dem Schloßgehäuse abhält. In einer anderen Ausführungsform kann der akustische Signalgeber durch ein piezokeramisches Schallelement gebildet sein, das den Vorteil hat, mit einem kleinen Raum auszukommen und dennoch ein durchdringendes Geräusch zu erzeugen.

Für die erfindungsgemäße Schloßvorrichtung ist es außerordentlich vorteilhaft, wenn sie am Fahrradrahmen fest montiert ist. Hierzu ist das Gehäuse aus zwei miteinander verbundenen Gehäuseteilen gebildet, die eine rohrförmige Durchgangsöffnung bilden. Auf diese Weise kann das Schloßgehäuse um ein Rohr des Fahrradrahmens herum montiert werden. Das schlaufenförmige Sicherungsteil ist dabei durch ein Drahtseil gebildet, das in dem Gehäusekörper federnd aufgewickelt wird, so daß das Drahtseil im nicht angeschlossenen Zustand zumindest weitgehend im Gehäuse verschwindet.

Die Erfindung soll im folgenden anhand von in der Zeichnung dargestellten Ausführungsbeispielen näher erläutert werden. Es zeigen:

Figur 1 eine Draufsicht auf ein geöffnetes Gehäuseteil, in dem die wesentlichen Baugruppen eines Ausführungsbeispiels für eine Schloßvorrichtung befestigt sind

Figur 2 eine Seitenansicht auf das geschlossene Schloßgehäuse

Figur 3 eine Draufsicht auf ein geöffnetes Gehäuseteil, in dem die wesentlichen Baugruppen gemäß einer weiteren Ausführungsform einer Schloßvorrichtung befestigt sind

Figur 4 eine Seitenansicht zur Kennzeichnung der Lage eines Schallelements.

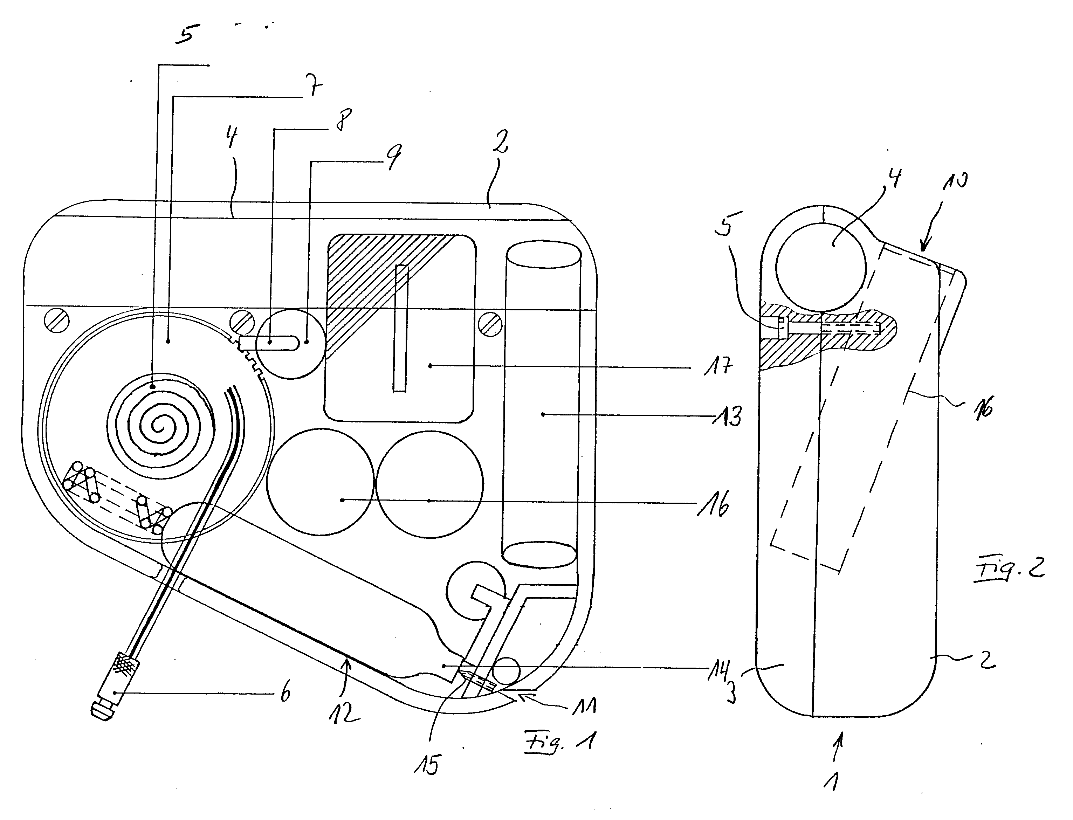

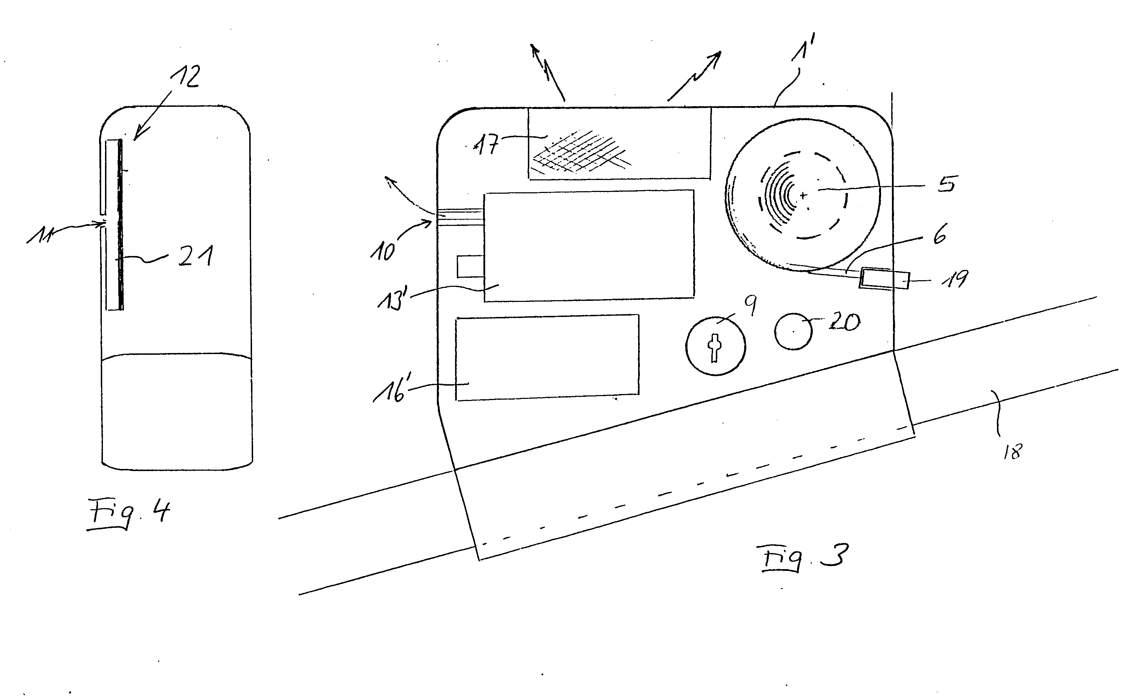

Das in den Figuren 1 und 2 dargestellte Gehäuse 1 der Schloßvorrichtung besteht aus zwei Gehäuseteilen 2, 3 , von denen das erste Gehäuseteil 2 eine größere Tiefe aufweist als das zweite Gehäuseteil 3, das im wesentlichen die Funktion eines Deckels ausübt. An einer Längskante des Gehäuses 1 bilden die beiden Gehäuseteile 2, 3 eine rohrförmige Durchgangsöffnung 4, mittels derer das Gehäuse 1 an einem beispielsweise horizontal verlaufenden Rohr eines Fahrradrahmens befestigbar ist. Die beiden Gehäuseteile 2,3 werden durch eine Schraube 5 zusammengehalten.

Figur 1 läßt den Aufbau im Innern des Gehäuses 1 erkennen. In dem Gehäuseteil 2 ist eine Aufrollfeder 5 für ein Sicherungsseil 6 vorgesehen. Die Aufrollfeder 5 sorgt dafür, daß das Sicherungsseil im Innern des Gehäuses 1 aufgewickelt ist, wenn sich die Schloßvorrichtung im unabgeschlossenen Zustand befindet.

Die Aufwicklung des Sicherungsseils geschieht auf einer Seiltrommel 7, deren Außenkontur zahnförmig ausgebildet ist. In die Zähne greift eine Raste 8 eines Schließmechanismus 9 ein, so daß das Aufspulen des Sicherungsseils nur bei geöffnetem Schließmechanismus 9 erfolgen kann.

Das Gehäuse weist Öffnungen 10,11 auf, hinter denen sich jeweils ein akustischer Signalgeber 12 und ein optischer Signalgeber befinden. Der akustische Signalgeber 12 ist durch eine Gaspatrone 14 gebildet, vor dem eine Pfeife 15 angeordnet ist. Der durch die Pfeife 15 mit Hilfe der Gaspatrone 14 erzeugte Pfeifton gelangt durch die Öffnung 11 ins Freie.

Der optische Signalgeber besteht aus einer Patrone 13, die mit einem hell abbrennenden Pulver gefüllt ist. Neben der Patrone 13 ist ein Blitzlicht 17 angeordnet, das sich zweckmäßigerweise hinter einem durchsichtigen Teil des Gehäuses 1 befindet. Zur Versorgung des Blitzlichts 17, zur Zündung des in der Patrone 13 enthaltenen Pulvers sowie zur Öffnung der Gaspatrone 14 dient ein von Batterien 16 gespeister (in der Zeichnung nicht dargestellter) Schaltkreis. Dieser löst die beschriebenen Funktionen aus, wenn bei betätigter Schließvorrichtung, in der das Sicherungsseil 6 in dem Gehäuse 1 mittels der Schließvorrichtung 9 verankert ist, ein Auslösedraht in dem Sicherungsseil 6 unterbrochen wird. Die Zündung der Patrone 13 geschieht über einen (nicht dargestellten) in die Patrone 13 ragenden Glühdraht, der durch den Batteriestrom die Zündtemperatur für das Pulver erzeugt.

Die beiden Patronen 14,13 sind unmittelbar entlang den Wänden des Gehäuseteils 2 angeordnet, so daß sie sich stabil befestigen lassen. Die Öffnungen 10, 11 befinden sich etwa in den Ecken des Gehäuses 1.

Bei dem in den Figuren 3 und 4 dargestellten Ausführungsbeispiel sind im wesentlichen gleiche Teile mit gleichen Bezugsziffern versehen worden. Die Durchgangsöffnung ist bei dem hier dargestellten Gehäuse 1' so angeordnet, daß sie für ein - schräg verlaufendes Rohr 18 eines Fahrradrahmens vorgesehen ist. In dem Gehäuse 1' ist zwischen den Batterien 16' und dem an einer Wand des Gehäuses 1 sitzenden Blitzlicht 17 eine Rauchpatrone 13' angeordnet, die mit einem hell abbrennbaren, stark färbenden Pulver gefüllt ist. Beim Abbrennen dieser Rauchpatrone 13' entsteht daher nicht nur ein optisches Signal sondern der zusätzliche Effekt, daß der Dieb und das Fahrrad eingefärbt werden. Diese Einfärbung ist nur durch gründliches Waschen wieder zu beseitigen.

Figur 3 zeigt noch, daß das Sicherungsseil 6 mit einem Verschluß 19 versehen ist, der in eine Verschlußaufnahme 20 zum Verriegeln der Schloßvorrichtung einsteckbar ist.

Figur 4 verdeutlicht, daß bei dieser Ausführungsform der akustische Signalgeber 12 durch ein piezokeramisches Element 21 gebildet ist, das vor einer Öffnung 11 für den akustischen Signalgeber 12 in dem Gehäuse sitzt.

## Ansprüche

1. Schloßvorrichtung zum Sichern von Zweiradfahrzeugen mit einem Gehäuse (1,1'), das beide Enden eines schlaufenförmigen Sicherungsteils (6) aufnimmt und in dem eine Rauchpatrone (13,13') und ein akustischer Signalgeber (12,12') angeordnet sind, die mittels eines das schlaufenförmige Sicherungsteil (6) durchlaufenden Auslösedrahts einschaltbar sind,

**dadurch gekennzeichnet,** daß der Auslösedraht mit einer im Gehäuse (1,1') angebrachten elektrischen Schaltung verbunden ist, daß Versorgungsbatterien (16, 16') im Gehäuse (1,1') angeordnet sind und daß die Rauchpatrone (13,13') und ein zusätzlicher optischer Signalgeber (17) durch die elektrische Schaltung auslösbar sind.

2. Schloßvorrichtung nach Anspruch 1, dadurch gekennzeichnet, daß die Rauchpatrone (13′) mit einem stark färbenden Pulver gefüllt ist.

3. Schloßvorrichtung nach Anspruch 1 oder 2, dadurch gekennzeichnet, daß der akustische Signalgeber (12) durch eine Gaspatrone (14) gebildet ist, auf der eine Pfeife (15) angeordnet ist.

4. Schloßvorrichtung nach Anspruch 1 oder 2, dadurch gekennzeichnet, daß der akustische Signalgeber (12) durch ein piezokeramisches Element (21) gebildet ist.

5. Schloßvorrichtung nach einem der Ansprüche 1 bis 4, dadurch gekennzeichnet, daß der zusätzliche optische Signalgeber (17) durch ein Blitzlicht gebildet ist.

6. Schloßvorrichtung nach einem der Ansprüche 1 bis 5, dadurch gekennzeichnet, daß das Gehäuse (1) aus zwei miteinander verbundenen Gehäuseteilen (2,3) gebildet ist, die eine rohrförmige Durchgangsöffnung (4) ausbilden.

Fig. 2

Fig. 1

12

11

21

Fig. 4

17

10

13'

16'

1'

5

6

19

9

20

18

Fig. 3

0 225 459